# EUROPÄISCHE PATENTANMELDUNG

(11) **EP 1 791 119 A1**
(43) Veröffentlichungstag der Anmeldung: **30.05.2007**
(21) Anmeldenummer: 05111328.0
(22) Anmeldetag: 25.11.2005
(51) Int. Cl.: G11B 7/09

(54) **Aktuator für eine optische Abtasteinrichtung**

(71) Anmelder: DEUTSCHE THOMSON-BRANDT GMBH, 78048 Villingen-Schwenningen (DE)
(72) Erfinder: Suzuki, Tsuneo, 78087 Mönchweiler (DE); Bammert, Michael, 78739 Hardt (DE); Dupper, Rolf, 78050 Villingen-Schwenningen (DE)
(74) Vertreter: Rossmanith, Manfred

(57) **Zusammenfassung**

Die Erfindung betrifft einen Aktuator (1) für eine optische Abtasteinrichtung, der eine in einem Linsenhalter (2) befestigte Fokuslinse (3) und eine mit einem Träger (5) fest verbundene Dämpferbasis (4) aufweist, und der mit einer am Träger (5) angeordneten Magnetanordnung (7) und mit einer mit der Magnetanordnung (7) zusammenwirkenden Spulenanordnung auf einer Leiterplatte (8) für eine Feinpositionierung der Fokuslinse (3) ausgerüstet ist, wobei die Leiterplatte (8) mit beidseits der Längsachse des Aktuators (1) angeordneten, elastisch biegsamen Aufhängemitteln (9) mit der Dämpferbasis (4) verbunden ist. Sie löst die Aufgabe, einen derartigen Aktuator (1) so zu gestalten, dass dieser durch eine reduzierte Masse ein verringertes Trägheitsmoment aufweist. Dazu ist die Leiterplatte (8) zugleich Trägerplatte für den Linsenhalter (2), und die Leiterplatte (8) und der Linsenhalter (2) bilden zusammen den beweglichen Teil (12) des Aktuators (1).

## Beschreibung

Die Erfindung betrifft einen Aktuator für eine optische Abtasteinrichtung zur Abtastung optischer Platten, insbesondere für ein Gerät zur Aufzeichnung oder zur Wiedergabe oder zur Aufzeichnung und Wiedergabe von Informationen.

Ein in einer Abtasteinrichtung integrierter Aktuator dient der Emission eines Lichtstrahls (Laserstrahls) auf eine als Informationsträger ausgebildete optische Platte und dem Empfang des von dieser reflektierten Strahls. Dazu weist der Aktuator eine Fokuslinse auf und ist mit einem Träger an einem auch als Pick up bekannten und an Führungsstangen verfahrbaren optischen Gehäuse verstellbar befestigt, um die Fokuslinse nach dem optischen Pfad des Gehäuses ausrichten zu können. Dieses Gehäuse und damit die gesamte Abtasteinrichtung ist mit hoher Geschwindigkeit und Positioniergenauigkeit, elektromotorisch angetrieben, bewegbar und stellt kurze Zugriffszeiten auf unterschiedliche Orte des Aufzeichnungsträgers sicher. Dabei fokussiert die Abtasteinrichtung ein Strahlungsbündel zum Bilden eines Strahlungspunktes auf einer abzutastenden Spur auf der Platte. Dieser Strahlungspunkt folgt der Spur der sich drehenden Platte beim Aufzeichnen oder Wiedergeben. Dies geschieht mit Hilfe eines Spursteuersystems, das eine grobe Steuerung des schlittenartigen Gehäuses und des Aktuators in einer radialen Richtung der Platte und eine Feinsteuerung des Aktuators ermöglicht. Diese Feinsteuerung ist erforderlich, um den Abstand zwischen der Fokuslinse und der optischen Platte konstant zu halten und um eine präzise Spurführung des projizierten Lichtstrahls sicherzustellen, da die Platte üblicherweise einen unvermeidlichen Exzentrizitätsfehler aufweist, der zu ungewollten Schwingungen während des Betriebes führt, die ihrerseits ohne die Feinsteuerung zu Wiedergabefehlern führen würden.

Der Aktuator ist vorzugsweise mit einer Trägerplatte am optischen Gehäuse befestigt und weist einen Linsenhalter für die Fokuslinse, eine trägerplattenfeste Dämpferbasis für den Linsenhalter und mit einer Magnetanordnung zusammenwirkende Fokusspulen, auch als Trackingspulen bezeichnete Spurführungsspulen und gegebenenfalls auch als Tiltspulen bezeichnete Neigungsspulen auf, wobei der Linsenhalter über elastisch biegsame Aufhängemittel, insbesondere auch Drähte, elastisch federnd mit der Dämpferbasis verbunden ist. Um die Masse des Aktuators zu reduzieren, damit dessen Trägheitsmoment geringer wird und dieser empfindlicher und schneller gesteuert werden kann, können die Spulen als gedruckte Spulen auf einer Leiterplatte (Spulenleiterplatte) angeordnet sein, die mit dem Linsenhalter verbunden ist.

Ein Aktuator mit einem Kunststoff-Linsenhalter ist in der JP-A-2003-346361 beschrieben. Bei diesem ist die Magnetanordnung nur auf einer Seite einer mit Fokus- und Trackingspulen bedruckten Spulenleiterplatte angeordnet und so platziert, dass die Spulen im Magnetfeld liegen. Diese Spulenleiterplatte, der Linsenhalter und ein sog. Substrathalter aus Metall für die Spulenleiterplatte sind mittels einer Vielzahl von am Substrathalter angeordneten Vorsprüngen aneinander positioniert und miteinander verbunden und bilden den bewegten Teil des Aktuators. Das heißt, der Substrathalter aus Metall wird als Bestandteil des bewegten Teils mit bewegt.

Auch die US-A-2002/0075575 offenbart in der Darstellung des Standes der Technik einen Aktuator mit einer Spulenleiterplatte. Bei diesem ist die Spulenleiterplatte zwischen zwei Magneten angeordnet, und die Fokuslinse ist mit einem Teil eines mit der Spulenleiterplatte verbundenen Linsenhalters im Bereich zwischen der Dämpferbasis und der Spulen- und Magnetanordnung positioniert. Der andere Teil des Linsenhalters umschließt die Spulen- und Magnetanordnung auf der der Fokuslinse abgewandten Seite und bildet mit der Fokuslinse den bewegten Teil des Aktuators. Der Linsenhalter hat somit eine erhebliche Masse und ein dementsprechend hohes Trägheitsmoment.

Es ist Aufgabe der Erfindung, einen Aktuator für eine optische Abtasteinrichtung nach dem Oberbegriff des Anspruchs 1 so zu gestalten, dass dieser durch eine reduzierte Masse ein verringertes Trägheitsmoment aufweist.

Diese Aufgabe wird bei einem Aktuator nach dem Oberbegriff des Anspruchs 1 durch dessen kennzeichnende Merkmale gelöst. Vorteilhafte Ausgestaltungen sind in den Unteransprüchen aufgeführt.

Die Erfindung besteht darin, dass bei einem Aktuator für eine optische Abtasteinrichtung, der in bekannter Weise eine in einem Linsenhalter befestigte Fokuslinse und eine Dämpferbasis aufweist, die mit einem Träger zur Anordnung an dem optischen Gehäuse der Abtasteinrichtung fest verbunden ist, und der mit einer am Träger angeordneten Magnetanordnung und mit einer mit der Magnetanordnung zusammenwirkenden Spulenanordnung auf einer Leiterplatte für eine Feinpositionierung der Fokuslinse versehen ist, wobei die Leiterplatte mit beidseits der Spulenanordnung und der Längsachse des Aktuators angeordneten elastisch biegsamen Aufhängemitteln mit der Dämpferbasis verbunden ist, die Leiterplatte zugleich Trägerplatte für den Linsenhalter ist und mit diesem den beweglichen Teil des Aktuators bildet. Damit ist ein kompakter Aktuator für eine optische Abtasteinrichtung geschaffen, der eine nur kleine bewegliche Masse aufweist, gebildet aus der Leiterplatte und dem an dieser angeordneten Linsenhalter mit der Fokuslinse, die zu einer vorteilhaft höheren Empfindlichkeit und Schnelligkeit bei der Feinsteuerung der Fokuslinse führt. Überdies ist der Aktuator einfach aufgebaut und benötigt nur wenige Bauteile, so dass auch dessen Montage vereinfacht und erleichtert ist. Der Linsenhalter selbst kann sehr klein ausgeführt sein, da die Leiterplatte ihn trägt und die Aufhängung mit übernimmt.

Die Leiterplatte ist bevorzugt quer zur Längsachse des Aktuators angeordnet und mit den beidseits der Längsachse des Aktuators angeordneten Aufhängemitteln fest verbunden, insbesondere verlötet. Dabei ist der Aktuator symmetrisch aufgebaut, wobei die Fokuslinse auf der der Dämpferbasis abgewandten Seite der Leiterplatte und somit am vorderen Ende des Aktuators angeordnet ist, und wird bei der Abtastung einer optischen Platte durch die Abtasteinrichtung mit dem optischen Gehäuse in radialer Richtung bezogen auf die optische Platte auf diese zu und von dieser weg bewegt.

Die Leiterplatte muss eine definierte Ausgangsposition in Parallellage zur Magnetanordnung haben. An der Leiterplatte ist auf der der Fokuslinse abgewandten und der Dämpferbasis zugewandten Seite eine Ausgleichsmasse befestigt. Vorteilhaft ist diese am Linsenhalter angeformt und wird somit zugleich mit diesem an der Leiterplatte montiert, wodurch kein zusätzlicher Montageaufwand anfällt.

Die Leiterplatte selbst ist bevorzugt eine Ein- oder Zweilagenleiterplatte, auf der in bekannter Weise die Fokus-und Spurführungsspulen angeordnet sind, deren Ansteuerung und Erregung im Magnetfeld der Permanentmagnete zu einer entsprechenden Feinbewegung der Leiterplatte und des angeschlossenen Linsenhalters mit der Fokuslinse führt. Um die Empfindlichkeit zu erhöhen, sind beidseits der Leiterplatte jeweils zwei Permanentmagnete vorgesehen.

Die Erfindung wird nachstehend anhand eines Ausführungsbeispiels erläutert. In den zugehörigen Zeichnungen zeigen:
- Fig. 1:: eine perspektivische Darstellung eines Aktuators,
- Fig. 2:: den beweglichen Teil des Aktuators,
- Fig. 3:: die den Aktuator mitbildende Leiterplatte und den Linsenhalter in der Art einer Explosionsdarstellung, gegenüber den Fig. 1 und 2 vergrößert, und
- Fig. 4:: den Linsenhalter in einer weiteren perspektivischen Ansicht.

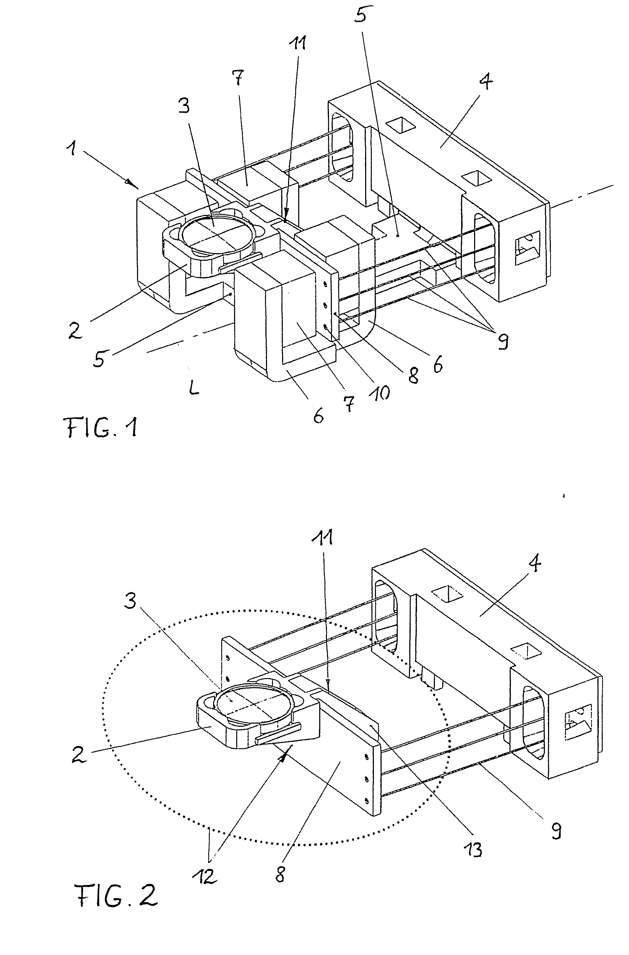

Der in Fig. 1 dargestellte Aktuator 1 als Bestandteil einer nicht weiter dargestellten optischen Abtasteinrichtung zur Abtastung einer optischen Platte weist eine in einem Linsenhalter 2 aus Kunststoff befestigte Fokuslinse 3 und eine Dämpferbasis 4 auf. Die Dämpferbasis 4 ist mit einer Trägerplatte 5 fest verbunden. An der Trägerplatte 5 ist ein Joch 6 ausgebildet, an dem vier Permanentmagnete 7 in symmetrischer Anordnung befestigt sind, von denen jeweils zwei Permanentmagnete 7 im Abstand von einer parallel zur Längsachse L des Aktuators verlaufenden Symmetrieachse und dort im Abstand voneinander angeordnet sind. Zwischen den dämpferbasisseitigen und den von der Dämpferbasis 4 entfernteren Permanentmagneten 7 ist eine Spulenleiterplatte 8 mit aufgedruckten, jedoch nicht dargestellten Fokus- und Spurführungspulen beweglich gehalten. Dazu ist die Spulenleiterplatte 8 mit beidseits der Längsachse L angeordneten, elastisch biegsamen Aufhängedrähten 9 mit der Dämpferbasis 4 verbunden, wobei die Aufhängedrähte 9 an der Spulenleiterplatte 8 in metallisierten Löchern 10 verlötet sind. Die Spulenleiterplatte 8 trägt dabei den Linsenhalter 2, der am vorderen Ende des Aktuators 1 und im Bereich zwischen den beiden von der Dämpferbasis 4 entfernteren Permanentmagneten 7 positioniert ist und der mit einer Ausgleichsmasse 11 versehen ist, die auf der der Dämpferbasis 4 zugewandten Seite der Spulenleiterplatte 8 in den zwischen den dämpferbasisseitigen Permanentmagneten 7 gegebenen Zwischenraum ragt.

Fig. 2 zeigt die Spulenleiterplatte 8 mit den an der Dämpferbasis 4 befestigten Aufhängedrähten 9 und mit dem Linsenhalter 2 mit der in diesen eingesetzten Fokuslinse 3, wobei der Linsenhalter 2 mit der Spulenleiterplatte 8 zu einer Montageeinheit 12 verbunden ist. Zu erkennen ist auch die Ausgleichsmasse 11 auf der der Dämpferbasis 4 zugewandten Seite der Spulenleiterplatte 8, die durch einen Ansatz 13 am Linsenhalter 2 gebildet ist. Die Montageeinheit 12 ist der bewegliche Teil des Aktuators 1, der während eines Lese- oder Schreibvorganges durch die Spulen- und Magnetanordnung feinpositioniert wird.

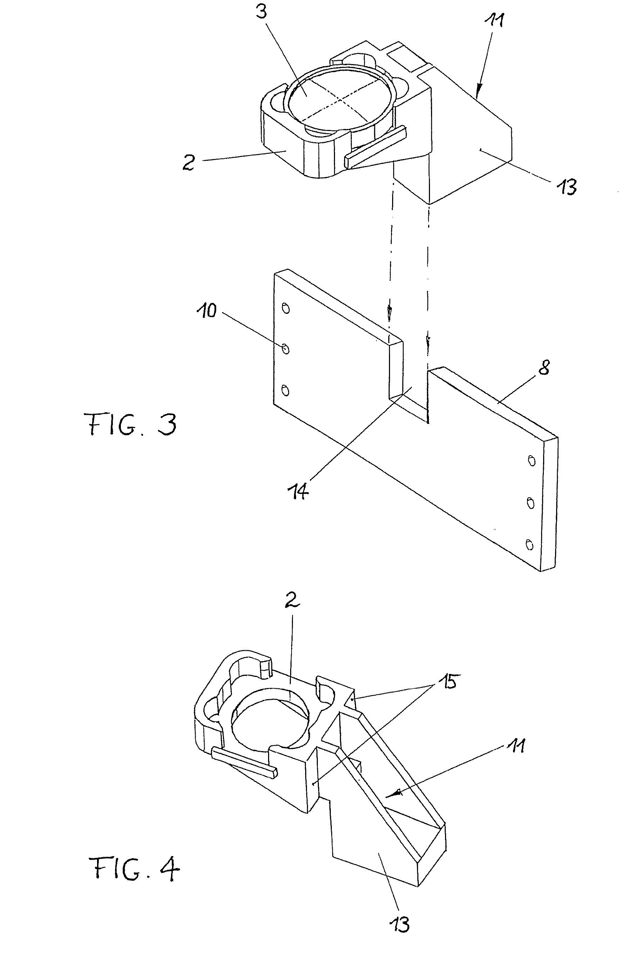

Die Fig. 3 und 4 verdeutlichen die Ausbildung des Linsenhalters 2 mit der an diesem angeformten Ausgleichsmasse 11 sowie dessen Verbindung mit der Spulenleiterplatte 8. Die Breite des Ansatzes 13 korrespondiert mit der Breite einer Ausnehmung 14 in der Spulenleiterplatte 8. Mit dem Ansatz 13 ist der Linsenhalter 2 in die Ausnehmung 14 passend eingesetzt und verklebt und liegt dabei mit zwei Anlageschultern 15 neben der Ausnehmung 14 an der Spulenleiterplatte 8 an, so dass eine definierte Anordnungsposition gegeben ist. Durch eine angemessen dimensionierte Ausgleichsmasse 11 kann erreicht werden, dass der Massenmittelpunkt (Schwerpunkt) der gesamten beweglichen Anordnung aus Leiterplatte 8 und Linsenhalter 2 in der Ebene der Leiterplatte 8, insbesondere bevorzugt in deren geometrischem Mittelpunkt liegt. In diesem Fall treten bei Krafteinwirkung auf die auf der Leiterplatte 8 befindlichen Spulen keine unerwünschten Drehmomente auf, welche unerwünschte Drehschwingungen der Montageeinheit 12 verursachen könnten.

Ein alternatives Ausführungsbeispiel zu der in den Fig. 1 bis 3 gezeigten Anordnung des Aktuators 1 aus Leiterplatte 8 und mittig davor bzw dahinter angeordnetem Linsenhalter 2 und Ausgleichsmasse 11, besteht darin, dass der Linsenhalter 2 mit Fokuslinse 3 an einem Ende der Spulenleiterplatte 8, in der Nähe der dort befestigten Gruppe von Aufhängedrähten 9, und damit in seitlichem Abstand zur Längsachse L des Aktuators 1 befestigt ist; und dass eine getrennt ausgeführte Ausgleichsmasse 11 an dem anderen Ende der Spulenleiterplatte 8, in der Nähe der anderen, dort befestigten Gruppe von Aufhängedrähten 9 befestigt ist. Eine solche Anordnung erlaubt es vorteilhaft, die Fokuslinse 3 besonders nah an die Mitte einer abzutastenden optischen Platte zu positionieren.

## Patentansprüche

1. Aktuator (1) für eine optische Abtasteinrichtung, mit einer in einem Linsenhalter (2) befestigten Fokuslinse (3) und einer Dämpferbasis (4), die mit einem Träger (5) fest verbunden ist, mit einer am Träger (5) angeordneten Magnetanordnung (7) und mit einer mit der Magnetanordnung (7) zusammenwirkenden Spulenanordnung auf einer Leiterplatte (8) für eine Feinpositionierung der Fokuslinse (3), wobei der Linsenhalter (2) mit beidseits der Längsachse des Aktuators (1) angeordneten, elastisch biegsamen Aufhängemitteln (9) mit der Dämpferbasis (4) verbunden ist, **dadurch gekennzeichnet, dass** die Leiterplatte (8) zugleich Trägerplatte für den Linsenhalter (2) ist und dass die Leiterplatte (8) und der Linsenhalter (2) zusammen den beweglichen Teil (12) des Aktuators (1) bilden.

2. Aktuator nach Anspruch 1, **dadurch gekennzeichnet, dass** die Leiterplatte (8) quer zur Längsachse (L) des Aktuators (1) angeordnet und mit den Aufhängemitteln (9) fest verbunden, insbesondere verlötet, ist.

3. Aktuator nach Anspruch 1, **dadurch gekennzeichnet, dass** der Aktuator (1) symmetrisch aufgebaut ist, und dass die Fokuslinse (3) am vorderen Ende des Aktuators (1) angeordnet ist.

4. Aktuator nach Anspruch 1, 2 oder 3, **dadurch gekennzeichnet, dass** auf der der Fokuslinse (3) abgewandten Seite der Leiterplatte (8) eine mit der Leiterplatte (8) verbundene Ausgleichsmasse (11) angeordnet ist.

5. Aktuator nach Anspruch 4, **dadurch gekennzeichnet, dass** die Ausgleichsmasse (11) am Linsenhalter (2) angeformt ist.

6. Aktuator nach Anspruch 1 oder 2, **dadurch gekennzeichnet, dass** als Aufhängemittel jeweils drei im Abstand übereinander angeordnete Aufhängedrähte (9) dienen.

7. Aktuator nach Anspruch 1, **dadurch gekennzeichnet, dass** die Magnetanordnung vier Permanentmagnete (7) umfasst, die an einem mit dem Träger (5) fest verbundenen Joch (6) befestigt sind.

8. Aktuator nach Anspruch 8, **dadurch gekennzeichnet, dass** zwei Permanentmagnete (7) auf der der Dämpferbasis (4) zugewandten Seite der Leiterplatte (8) und zwei Permanentmagnete (7) auf der der Dämpferbasis (4) abgewandten Seite der Leiterplatte (8) angeordnet sind.

9. Aktuator nach einem oder mehreren der vorhergehenden Ansprüche, **dadurch gekennzeichnet, dass** der Aktuator (1) mit einem optischen Gehäuse eine Abtasteinrichtung bildet, die entlang seiner Längsachse (L) bewegt wird.

10. Gerät zum Lesen oder zum Beschreiben oder zum Lesen und Beschreiben optischer Speichermedien, **dadurch gekennzeichnet, dass** es einen Aktuator (1) nach einem oder mehreren der vorhergehenden Ansprüche und eine mit dem Aktuator (1) gebildete Abtasteinrichtung aufweist.
